# EUROPÄISCHE PATENTSCHRIFT

(11) **EP 2 429 803 B1**
(45) Veröffentlichungstag und Bekanntmachung des Hinweises auf die Patenterteilung: **27.01.2016**
(21) Anmeldenummer: 10718033.3
(22) Anmeldetag: 06.05.2010
(51) Int. Cl.: B29C 70/08, B29C 70/22, B32B 1/08

(54) **STRUKTURELEMENT SOWIE VERFAHREN ZU DESSEN HERSTELLUNG**
STRUCTURAL ELEMENT AND METHOD FOR THE PRODUCTION THEREOF
ÉLÉMENT STRUCTURAL ET PROCÉDÉ DE FABRICATION

(30) Priorität: 15.05.2009 AT 7592009
(43) Veröffentlichungstag der Anmeldung: 21.03.2012
(73) Patentinhaber: SuperTEX composites GmbH, 6410 Telfs (AT)
(72) Erfinder: TROI, Valentine, A-6020 Innsbruck (AT)
(74) Vertreter: Dilg, Haeusler, Schindelmann Patentanwaltsgesellschaft mbH
(86) Internationale Anmeldenummer: PCT/AT2010/000152
(87) Internationale Veröffentlichungsnummer: WO 2010/129975

(56) Entgegenhaltungen:
- EP-A1- 1 170 117
- EP-A2- 1 264 717
- WO-A1-95/30532
- CH-A- 459 549
- DE-A1- 10 304 044
- JP-A- 57 022 016
- JP-A- 58 119 822
- US-A- 4 746 386

## Beschreibung

Die Erfindung betrifft ein Verfahren zur Herstellung eines Strukturelements, umfassend einen faserverstärkten Kunststoff.

Aus der US 6,082,075 ist die Herstellung von Strukturelementen, umfassend einen faserverstärkten Kunststoff, bereits bekannt. Dabei wird ein Skelett aus Rohren und Spanten mit mehreren Halteelementen in die gewünschte Form gebracht und anschließend mit einem Gewebe, das um dieses Skelett gewickelt wird, versehen. Schließlich wird ein Kunststoff aufgebracht, der zur Aushärtung gebracht wird und dem Strukturelement die endgültige Form gibt. Vereinfacht ausgedrückt schlägt die US 6,082,075 die Herstellung von Kastenholmen vor, wobei ein Skelett - nachdem es in die gewünschte Form gebracht wurde - mit Gewebe umwickelt wird und hernach auf dieses Gewebe aushärtbarer Kunststoff aufgebracht wird.

Das in der US 6,082,075 beschriebene Verfahren weist den Nachteil auf, dass die Herstellung des formgebenden Skelettes aus Rohren, Halteelementen und Spanten sehr aufwändig ist und dass aufgrund der Komplexität des vorgeschlagenen Skelettes die Formbarkeit der Strukturelemente engen Grenzen unterliegt. So sind beispielsweise enge Biegeradien oder komplexere Topologien wie z.B. Schlingen, Schlaufen oder Knoten nicht oder nur mit erheblichem Aufwand machbar. Weiters ist das in der US 6,082,075 vorgeschlagene Aufbringen des Gewebes durch Umwickeln der finalen Form sehr aufwändig und zusätzlich weist die so erzielbare Oberfläche aufgrund der Wickelstruktur des Gewebes optische Beeinträchtigungen auf.

Die US 6,082,075 schlägt ein weiteres Verfahren vor, in welchem anstelle des formgebenden Skelettes aus Rohren, Halteelementen und Spanten eine aufblasbare Blase als Positiv-Form für die Aufbringung des faserverstärkten Kunststoffes verwendet wird, wobei diese Blase so ausgebildet sein muss, dass sie durch das Aufblasen die gewünschte Form einnimmt, auf welche hernach das Gewebe durch Umwickeln aufgebracht wird.

Dieses Verfahren weist die Nachteile auf, dass einerseits die Herstellung einer solchen aufblasbaren Positv-Form, welche durch den Aufblasdruck die gewünschte Form einnehmen soll, sehr aufwändig ist und andererseits auch hier enge Biegeradien oder komplexere Topologien wie z.B. Schlingen, Schlaufen oder Knoten nicht oder nur mit erheblichem Aufwand machbar sind.

Weiters eignen sich die in der US 6,082,075 vorgeschlagen Strukturelemente nicht oder nur unter unverhältnismäßig hohem Herstellungs- und Kostenaufwand zum Verbund zu komplexeren Konstruktionsmodulen, Trägerelementen, Tragwerken und frei form- und gestaltbaren Flächentragwerken.

Aus der WO 95/30532 A1 ist ein Verfahren zur Herstellung eine rohrförmigen Strukturelements bekannt. Ein rohrförmiger Kern aus einem thermoplastischen Material wird zunächst in einem Extrusionsverfahren hergestellt. Anschließend werden mehrere Lagen von Fasermaterial auf diesen Kern aufgebracht. Der mit den Fasern versehene Kern wird anschließend in eine beheizte Düse eingebracht, in der die Faserschichten mit einem Matrixmaterial getränkt werden. Das getränkte und ausgehärtete Faserverbundelement wird daraufhin mit einer thermoplastischen Außenschicht versehen, die mittels eines Extruders aufgebracht wird. Anschließend werden mittels einer Säge geradlinige und rohrförmige Strukturelemente erzeugt. Zum Formen dieser Strukturelemente werden diese erhitzt, so dass das Matrixmaterial im Inneren flüssig wird. Nach dem Abkühlen verbleibt das geformte Strukturelement in der gewünschten Form.

Aus der JP 57 022016 A ist ein Verfahren zur Herstellung eines Strukturelements bekannt, bei dem ein faserverstärktes Verbundmaterial auf die Umfangsfläche eines elastischen Rohrs aufgebracht wird. Das elastische Rohr wird an einem Ende verschlossen und in ein Metallrohr eingeführt. Das Metallrohr weist Öffnungen auf und bildet eine Form für das elastische Rohr. Durch das offene Ende des elastischen Rohrs wird Druckluft zugeführt, so dass im elastischen Rohr ein Druck entsteht, der dieses gegen das Metallrohr presst. Das Metallrohr wird zusammen mit dem elastischen Rohr in die gewünschte Form gebogen und anschließend derart beheizt, dass das faserverstärkte Verbundmaterial aushärtet.

Aus der EP 1 264 717 A2 ist ein Verfahren zur Herstellung einer Klimaanlagen-Leitung bekannt. Eine kältemitteldichte Elastomerschlauch-Seele wird mit einer flexiblen Faserhülle versehen, die eine Kunststoffimprägnierung aufweist. Die Elastomerschlauch-Seele wird zusammen mit der Faserhülle und der Kunststoffimprägnierung in einer Form fixiert und unter einen Innendruck gesetzt, so dass das gesamte Gebilde gegen eine Formhohlraumwand angedrückt wird. Durch einen Heizvorgang erfolgt ein Aushärten der Kunststoffimprägnierung.

Aus der JP 58 119822 A ist ein Verfahren zur Herstellung eines rohrförmigen Strukturelements bekannt, bei dem auf einen Dorn eine Materialschicht aus einem Kunststoffmaterial und einem Fasermaterial aufgebracht wird. Anschließend wird ein steifer Stab des Dorns entfernt und durch einen flexiblen Stab ersetzt, mittels dessen der Zylinder des Dorns sowie die darauf aufgebrachte Materialschicht in eine gewünschte Form gebogen wird. Daraufhin wird ein Kunststofffilm auf die Materialschicht aufgebracht und diese ausgehärtet. Der Zylinder wird anschließend herausgezogen und der Film entfernt, so dass ein in der gewünschten Form gebogenes Rohr entsteht.

Aus der CH 459 549 A ist ein Verfahren zur Herstellung von fasergewickelten Kunststoff-Rohrbögen bekannt. Hierbei wird als Wickelkern ein aufblasbarer Schlauch verwendet. Nach dem Aufblasen des Schlauchs wird zunächst eine Linerschicht und dann eine Wicklung aufgebracht. Nach dem Angelieren einer härtbaren Kunstharzmasse wird der Schlauch mit der Linerschlicht und der Wicklung in die gewünschte Form gebogen und in eine zweiteilige Schlauchform eingelegt. In dieser Schlauchform erfolgt die Aushärtung in einem Wärmeschrank. Nach dem Aushärten werden der Schlauch und die Schlauchform entfernt.

Aus der US 4 756 386 A ist ein Verfahren zur Herstellung eines faserverstärkten, gebogenen Rohres bekannt. Zur Herstellung wird ein Kern verwendet, der ein elastisches Rohr aufweist, das mittels einer Feder verstärkt ist. Auf den Kern wird eine Faserschicht aufgetragen. Anschließend wird der Kern zusammen mit der Faserschicht gebogen und in eine aus zwei Teilen bestehende Außenform gegeben. Über einen Einlass wird der Außenform flüssiges Harz zugeführt. Nach dem Aushärten des Harzes wird die Außenform entfernt und der Kern aus dem faserverstärkten Rohr gezogen.

Aus der DE 103 04 044 A1 ist ein Verfahren zur Herstellung von Rohren aus Faserverbundmaterial bekannt. Zur Herstellung eines Rohres wird ein Montagekern zunächst mit einer luftdichten Schicht und mit mindestens zwei Leitungen versehen. Die Leitungen ermöglichen ein Fließen des einzubringenden Matrixmaterials mit einem vergleichsweise geringen Fließwiderstand. Auf den Montagekern wird eine Verteilerschicht und eine Verstärkungsfaserschicht aufgebracht, wobei der derart bestückte Montagekern in eine Außenform eingelegt wird. Anschließend wird Matrixmaterial injiziert, das die Verstärkungsfaserschicht tränkt.

Aus der EP 1 170 117 A1 ist die Herstellung von faserverstärkten Rohrkörpern bekannt. Das Matrixmaterial wird durch Anlegen eines Vakuums in eine Schicht aus Verstärkungsfasern eingebracht. Hierzu sind die Verstärkungsfasern von einem luftdichten Material umgeben, das entweder von einem Vakuumschlauch oder einer Form gebildet wird.

Der Erfindung liegt die Aufgabe zugrunde, ein einfaches Verfahren zur Herstellung eines frei formbaren und nach dem Aushärten stabilen Strukturelements zu schaffen.

Diese Aufgabe wird durch ein Verfahren gemäß Anspruch 1 gelöst.

Die Erfindung beruht auf der Erkenntnis, dass ein vorzugsweise dehnbares Schlauchgewebe rascher mit einem flexiblen formgebenden Element in Berührung gebracht werden kann und die anschließende Tränkung mit flüssigem Kunststoff einfacher erfolgen kann, als wenn ein bandförmiges Gewebe um eine Positiv-Form gewickelt werden muss. Das flexible form-gebende Element ist als flexibler Schlauch ausgebildet. Dabei ist insbesondere auch von Vorteil, dass der (als formgebendes Element dienende) flexible Schlauch bereits bevor er in die gewünschte finale Form gebracht wird mit dem (zur Faserverstärkung des Kunststoffs dienenden) Schlauchgewebe versehen werden kann. Bei der Herstellung von komplexeren Strukturen und Anordnungen, welche aus einem Verbund von mehreren erfindungsgemäßen Strukturelementen bestehen, ist es dadurch möglich, die einzelnen Strukturelemente bereits vor dem Zusammenfügen zum Verbund und bereits vor der finalen Formgebung mit dem Gewebe zu versehen. Die Herstellung von komplexen Elementen (wie beispielsweise Konstruktionsmodule, Trägerelemente, Tragwerke und frei form- und gestaltbaren Flächentragwerke) kann so - verglichen mit Verfahren, bei denen das Gewebe erst um die finale Form gewickelt wird - wesentlich vereinfacht werden, wodurch deutliche Produktions- und Kostenvorteile erzielbar sind.

Das Schlauchgewebe wird vor dem Versehen mit flüssigem Kunststoff bzw. vor dem Aushärten des Kunststoffs mit einem zusätzlichen Schlauchmantel versehen. Diese Maßnahme führt dazu, dass die Oberfläche des ausgehärteten Kunststoffs ebenmäßiger ausgebildet ist, was beispielsweise optisch ansprechendere Ergebnissen liefert, weil der zusätzliche Schlauchmantel die Oberflächenstruktur vorgibt und ebenfalls wird eines bessere Durchtränkung der Faserkomponente mit dem flüssigen Kunststoff bewirkt.

Von der Handhabungsseite hat es sich als vorteilhaft erwiesen, wenn der flüssige Kunststoff zwischen flexiblen Schlauch und zusätzlichem Schlauchmantel infundiert wird. Dabei wird zwischen zusätzlichem Schlauchmantel und Schlauchgewebe oder zwischen flexiblen Schlauch und Schlauchgewebe eine Fließhilfe eingebracht. Die Fließhilfe kann beispielsweise auch aufgeflochten werden. Die Fließhilfe bewirkt einerseits eine bessere Infundierbarkeit des Kunststoffes und andererseits auch einen Sandwicheffekt zur Stabilisierung des fertigen Strukturelements. Dadurch wird eine höhere statische Belastbarkeit erzielt. Die Fließhilfe kann z.B. eine maschenartiges Geflecht, ein vliesartiges Gewebe aus Kunststofffasern wie PE, Polyamid, PP etc sein.

Das Verfahren erweist sich als vorteilhaft, da das Schlauchgewebe in das Innere des flexiblen Schlauchs eingebracht wird. Gemäß der US 6,082,075 hergestellte Strukturelemente müssen das formgebende Element praktisch immer im Inneren beherbergen, d.h. das Gewebe muss außen auf das form-gebende Element aufgewickelt werden. Demgegenüber ist es mit einem Schlauchgewebe möglich, dieses in das Innere des flexiblen Schlauchs, d.h. auf dessen Innenmantelfläche einzubringen und anschließend durch Aufbringen von flüssigem Kunststoff, der ausgehärtet wird, das endgültige Strukturelement herzustellen. Dabei ist vorgesehen, dass der flüssige Kunststoff durch das Anlegen eines erhöhten Drucks in das Innere des flexiblen Schlauchs eingebracht wird. Weiters kann erfindungsgemäß vorgesehen sein, nach dem Tränken des Schlauchgewebes mit flüssigem Kunststoff überschüssigen Kunststoff aus dem Innenvolumen des Schlauches mittels Über- oder Unterdruck oder mechanisch zu entfernen, was sowohl Gewichts- als auch Kostenvorteile bringt.

Der flexible Schlauch ist ausgewählt aus der Gruppe Gummi, PVC, PE, PA, PU, der Silikone oder PTFE.

Bevorzugt kann vorgesehen sein, dass der Schlauch nach dem Aushärten des Kunststoffs zumindest teilweise wieder entfernt wird. Zurück bleibt in diesem Fall nur mehr noch der faserverstärkte Kunststoff als Strukturelement. Dies ist besonders einfach zu bewerkstelligen da das Schlauchgewebe in das Innere des flexiblen Schlauchs eingebracht wurdeund der flexible Schlauch beispielsweise aufgeschnitten und entfernt werden kann.

Die Flexibilität des Schlauches sollte so gestaltet sein, dass dieser ohne große Kraftaufwendungen in die gewünschte Form gebracht werden kann. Zu diesem Zweck ist es vorteilhaft (auch abhängig von der jeweiligen Materialwahl), wenn der Schlauch einen Durchmesser von 5 mm bis 100 mm und eine Wandstärke von 0,5 mm bis 15 mm aufweist. Die Flexibilität des Schlauchs hängt unter anderem vom Elastizitätsmodul des Materials ab. Ausgehend von der mittleren Wandstärke des Schlauchs und der Materialauswahl ist es günstig, wenn der Schlauch so flexibel ist, dass er mit einer Kraft von unter 500 N, vorzugsweise unter 100 N, in die gewünschte Form gebracht werden kann. Der Elastizitätsmodul wird standardmäßig in N/mm² und bei einer Temperatur von 20°C angegeben. Dementsprechend können natürlich auch biegeweiche Rohre eingesetzt werden. Hieraus kann der Fachmann leicht ermitteln, welche Materialien und Querschnittsflächen des Schlauchs auszuwählen sind. Der flexible Schlauch weist im einfachsten Fall einen kreisringförmigen Querschnitt auf, ist also beispielsweise als Kreiszylindermantel ausgebildet. Selbstverständlich kann der Schlauch aber auch vom Kreisring abweichende Querschnittsformen aufweisen. Der Schlauch kann sowohl eine Innenkontur als auch Außenkontur (im Querschnitt) aufweisen, die polygonartig, rechteckig, quadratisch, elliptisch ist oder eine sonstige geschlossene Kurvenform aufweisen.

Ein weiterer Vorteil der Erfindung liegt darin, dass der als formgebendes Element dienende flexible Schlauch aufgrund seiner Eigensteifigkeit in die finale Form gebracht werden kann, indem man Kräfte und/oder Drehmomente lediglich an einzelnen Punkten einbringt. Beispielsweise sind auf diese Weise Formen wie Biegungen, S-Kurven, sogenannte Spline-Kurven sowie Schlingen und Schlaufen bis hin zu Knoten ohne aufwändigen Formenbau realisierbar. Die Formgebung kann z.B. über eine Modelliermaschine CNC gesteuert ablaufen.

Erfindungsgemäß ist auch vorgesehen, dass ein Verbund aus einzelnen erfindungsgemäßen Strukturelementen vor dem Aushärten des Kunststoffes durch das Einbringen von Kräften und/oder Drehmomenten lediglich an einzelnen Punkten in die finale Form gebracht wird, wodurch auch beispielsweise frei geformte Flächentragwerke ohne aufwändigen Formenbau realisierbar sind.

In einer Ausführungsvariante kann vorgesehen sein, dass das Schlauchgewebe mehrere Lagen aufweist, und/oder dass zusätzliche Schichten vorgesehen sind, um dem Strukturelement eine höhere Steifigkeit zu verleihen.

Im einfachsten Fall kann vorgesehen sein, dass der flüssige Kunststoff durch Polymerisation ausgehärtet wird. Hierbei haben sich insbesondere Kunststoffe, ausgewählt aus der Gruppe der Epoxidharze, Polyesterharze, Vinylesterharze oder Mischungen daraus bewährt. Die Polymerisation kann dabei wie an sich bekannt beispielsweise durch UV-Strahlung, thermische Behandlung oder Lufttrocknung etc. erfolgen.

Weiters kann vorgesehen sein, dass das Schlauchgewebe ausgewählt ist aus der Gruppe von gewebten und geflochtenen Glasfasern, Kohlenstofffasern, Aramidfasern, Basaltfasern, Hanf, Flachs, Baumwolle oder Mischungen daraus. Glasfasern haben sich dabei als bevorzugtes Ausführungsbeispiel erwiesen, da sie einerseits kostengünstig sind bei gleichzeitig sehr hoher Belastbarkeit. Zusätzlich sind sie aufgrund ihrer Farblosigkeit in vielen Bereichen, die lichtdurchlässig sein sollen, bevorzugt einsetzbar.

Besonders bevorzugt ist vorgesehen, dass das Schlauchgewebe zylindermantelförmig ausgebildet ist. Weiters ist bevorzugt vorgesehen, dass das Schlauchgewebe derart gewebt ist, dass es radial und in Längsrichtung dehnbar ist, was für das Aufbringen auf oder das Einbringen in den als formgebendes Element dienenden flexiblen Schlauch von Vorteil ist. Hier kann sich ein beispielsweise biaxial gewebtes bzw. geflochtenes Gewebe als günstig erweisen.

In der Ausführungsvariante mit außen liegendem Schlauchgewebe ist besonders bevorzugt vorgesehen, dass das Schlauchgewebe derart gewebt bzw. geflochten ist, dass sich bei Zug in Längsrichtung sein Radius verkleinert. Dadurch kann bei Auswahl eines Schlauchgewebes, welches einen Innendurchmesser aufweist, der einige Prozent größer ist, als der Außendurchmesser des flexiblen Schlauches, das Schlauchgewebe leicht über den flexiblen Schlauch gestülpt werden und hernach durch einfaches Ziehen an beiden Enden straff auf den als formgebendes Element dienenden Schlauch gespannt werden, was sowohl für die Einfachheit des Verfahrens, als auch für die erzielbare Qualität der Oberfläche von Vorteil ist.

In der Ausführungsvariante mit innen liegendem Schlauchgewebe ist besonders bevorzugt vorgesehen, dass das Schlauchgewebe derart gewebt ist, dass es radial dehnbar ist, sodass für leichtes Einführen in den formgebenden Schlauch ein Schlauchgewebe gewählt werden kann, dessen Außendurchmesser einige Prozent kleiner ist, als der Innendurchmesser des Schlauches, und das Schlauchgewebe hernach durch radiales Dehnen an die Innenwand des formgebenden Schlauches geschmiegt werden kann - beispielsweise mittels geeigneten Bürsten oder durch Einbringen und Aufblasen eines weiteren aufblasbaren Innenschlauches.

Es kann vorgesehen sein, dass der zusätzliche Schlauchmantel nach dem Aushärten des Kunststoffs entfernt wird, speziell, wenn die Oberfläche des erhaltenen Strukturelements aus dem gehärteten Kunststoff gebildet sein soll. Theoretisch kann der zusätzliche Schlauchmantel aber auch am Strukturelement verbleiben.

Das Schlauchgewebe ist an der inneren Mantelfläche des flexiblen Schlauchs angeordnet.

Generell ist für das hergestellte Strukturelement zu sagen, dass die oben erwähnten Materialien und Dimensionen für das Verfahren auch für das Strukturelement zutreffen. Dies bedeutet, dass der flexible Schlauch ausgewählt ist aus der Gruppe Gummi, PVC, PE, PA, PU der Silikone und PTFE. Dessen Dimension kann zwischen 5 mm und 100 mm bei einer mittleren Wandstärke von 0,5 mm bis 15 mm betragen. Das Schlauchgewebe kann mehrlagig ausgebildet sein und der ausgehärtete Kunststoff kann ein Polymerisat aus der Gruppe der Epoxidharze, Polyesterharze, Vinylesterharze oder Mischungen daraus sein. Das Strukturelement ist im Inneren hohl ausgebildet.

Das Schlauchgewebe ist bevorzugt aus der Gruppe von gewebten Glasfasern, Kohlenstofffasern, Aramidfasern, Basaltfasern, Hanf, Flachs, Baumwolle oder Mischungen daraus hergestellt und idealerweise zylindermantelförmig ausgebildet. Besonders bevorzugt ist das Schlauchgewebe radial und in Längsrichtung dehnbar ausgebildet, indem es beispielsweise biaxial gewebt ist. Sowohl zum Verfahren als auch zum Strukturelement gilt zu sagen, dass besonders bevorzugt vorgesehen ist, dass der flexible Schlauch unmittelbar mit dem Schlauchgewebe in Kontakt gebracht wird, d.h. dass das Schlauchgewebe unmittelbar an den flexiblen formgebenden Schlauch angrenzt. Auch kann der flexible Schlauch wenigstens abschnittsweise perforiert sein. Dadurch kann die Masse des Strukturelements erniedrigt werden, ohne dass es zu einer nennenswerten Stabilitätsverminderung kommt. Es gibt diverse Verwendungsmöglichkeiten der zuvor beschriebenen Strukturelemente. Dies kann einerseits eine einfache Anordnung mehrerer solcher Strukturelemente umfassen. Darüber hinaus sind komplexere Anordnungen wie beispielsweise Konstruktionsmodule, Trägerelemente, Tragwerke und frei form- und gestaltbare Flächentragwerke, Dachkonstruktionen oder andere Gebilde, die durch solche Strukturelemente herstellbar sind, denkbar.

Bei Anordnungen ist vorgesehen, dass zumindest zwei Strukturelemente nach dem zuvor beschriebenen Verfahren hergestellt werden, die miteinander verbunden werden. Die wenigstens zwei Strukturelemente können dabei vor dem Aushärten des Kunststoffs miteinander verbunden werden. Dabei ist es also entweder möglich, den flexiblen Schlauch, der mit dem Schlauchgewebe versehen worden ist, mit einem zweiten flexiblen Schlauch, der mit einem Schlauchgewebe versehen worden ist, vor oder nach dem Aufbringen des Kunststoffs miteinander zu verbinden und den Kunststoff anschließend auszuhärten. Das Verbinden kann wie an sich bekannt mit Halteelementen, Klebeverbindungen usw. erfolgen.

Typische Einsatzgebiete der Strukturelemente der vorgenannten Art sind beispielsweise in Dachkonstruktionen, Deckenelementen, Fassadenelementen, Möbelteilen, Beleuchtungskörpern, in Rauminstallationen oder dergleichen. Die zuvor genannten Strukturelemente können auch mit anderen Materialien wie z.B. Textilien, plattenförmigen Materialien etc. kombiniert bzw. eingearbeitet werden.

Weitere Details und Vorteile der Erfindung sollen anhand der folgenden Figuren und Figurenbeschreibungen erläutert werden. Es zeigen:
- Fig. 1a, 1b: ein erstes Ausführungsbeispiel für ein nicht erfindungsgemäßes Strukturelement in Längs- und Querschnitt,
- Fig. 2a und 2b: ein zweites Ausführungsbeispiel eines nicht erfindungsgemäßen Strukturelements in Längs- und Querschnitt,
- Fig. 3a und 3b: ein drittes Ausführungsbeispiel eines nicht erfindungsgemäßen Strukturelements in Längs- und Querschnitt,
- Fig. 4a bis 4d: ein viertes und fünftes Ausführungsbeispiel von Strukturelementen in Längs- und Querschnitt,
- Fig. 5a und 5b: ein sechstes Ausführungsbeispiel eines Strukturelements in Längs- und Querschnitt,
- Fig. 6: einzelne Verfahrensschritte für ein nicht erfindungsgemäßes Verfahren,
- Fig. 7: Verfahrensschritte für ein erfindungsgemäßes Verfahren,
- Fig. 8 und 9: Verfahrensschritte für ein nicht erfindungsgemäßes Verfahren,
- Fig. 10a und 10b: Detailansichten der Verfahrensschritte "A" der Fig. 6 und 7,
- Fig. 11 a und 11b: ein Schlauchgewebe in unterschiedlichen Positionen zur Verwendung für ein erfindungsgemäßes Verfahren,
- Fig. 12a bis 12e: mögliche Anordnungen der Strukturelemente und
- Fig. 13a bis 13c: drei Ansichten einer Anordnung von Strukturelementen.

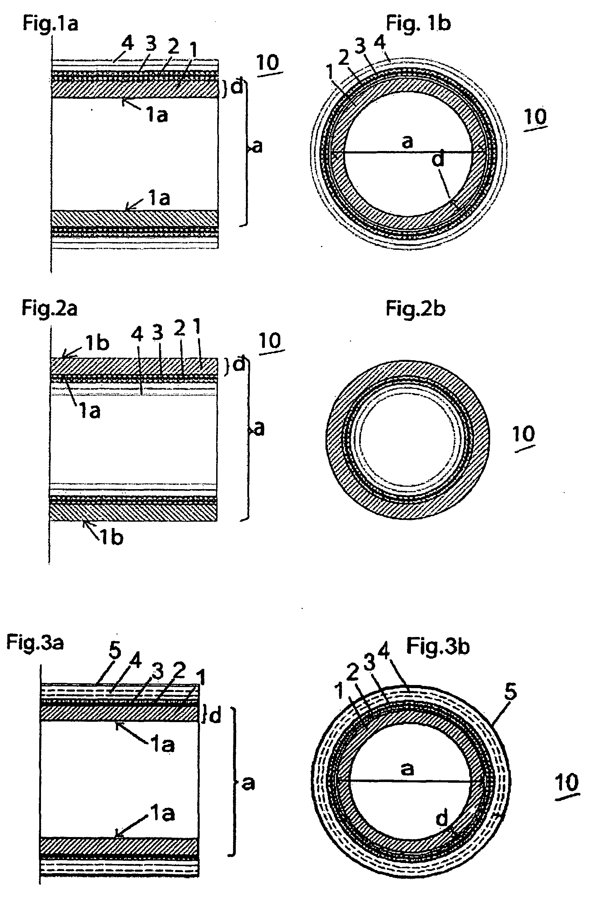

Die Fig. 1a zeigt im Längsschnitt ein nicht erfindungsgemäßes Strukturelement 10. Die Fig. 1b zeigt den entsprechenden Querschnitt des Strukturelements 10. Dabei ist ein flexibler Trägerschlauch 1 als strukturgebendes Element im Inneren vorgesehen. Um den flexiblen Schlauch 1 ist nunmehr ein Schlauchgewebe 2 aufgebracht, das an der Außenmantelfläche des Schlauchs 1 liegt, auf das anschließend ein Kunststoff 3 aufgebracht wird, der eine Matrix bildet. Die Schicht 4 kennzeichnet eine weitere Schicht mit oder ohne Schlauchgewebe und einem Kunststoff. Der mittlere Außendurchmesser a des flexiblen Schlauches 1 beträgt etwa 30 mm, die mittlere Wandstärke d 1,5 mm (als mittlerer Wert ist der arithmetische Mittelwert 25 gedacht).

In den Fig. 2a und 2b sind die analogen Ansichten der Fig. 1a und 1b gezeigt, wobei hier die Reihenfolge der einzelnen Schichten verändert wurde. An der Innenmantelfläche 1a des flexiblen Trägerschlauchs 1 ist nunmehr ein Schlauchgewebe 2 angeordnet, das anschließend mit einer härtbaren Kunststoffmasse 3 versehen wurde. Die Schicht 4 kennzeichnet eine weitere solche Schicht. Die in den Fig. 1a bis 2b gezeigten nicht erfindungsgemäßen Ausführungsbeispiele umfassen einen flexiblen Schlauch 1 aus PVC, ein Schlauchgewebe 2 aus Glasfasergewebe und einen Kunststoff, der gehärtetes Polyesterharz umfasst.

Die Fig. 3a und 3b zeigen eine weitere nicht erfindungsgemäße Ausführungsvariante angelehnt an das Ausführungsbeispiel der Fig. 1a und 1b. Erneut erkennbar ist ein flexibler Trägerschlauch 1 als strukturgebendes Element im Inneren. Um den flexiblen Schlauch 1 ist ein Schlauchgewebe 2 aufgebracht, das an der Außenmantelfläche des Schlauchs 1 liegt, auf das anschließend ein Kunststoff 3 aufgebracht wird, der eine Matrix bildet. Die Schicht 4 kennzeichnet eine weitere Schicht mit oder ohne Schlauchgewebe und einem Kunststoff. Zusätzlich ist auf dem Schlauchgewebe 2 ein weiterer Schlauchmantel 5 in der Form eines Schrumpfschlauches angeordnet.

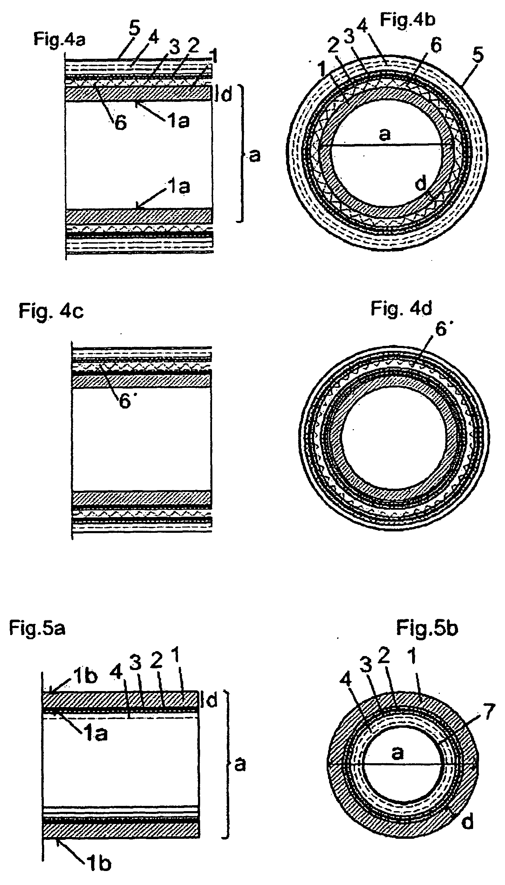

Das Ausführungsbeispiel der Fig. 4a und 4b zeigt eine Variante des Ausführungsbeispiels der Fig. 3a und 3b allerdings in diesem Fall mit einer Fließhilfe 6 zwischen flexiblen Schlauch 1 und Schlauchgewebe 2 zum besseren infundieren von flüssigem Kunststoff. Fig. 4c und 4d zeigen ebenfalls eine Variante des Ausführungsbeispiels der Fig. 3a und 3b, diesmal allerdings mit einer Fließhilfe 6 zwischen Schlauchgewebe 2 und dem weiteren Schlauchmantel 5.

Das Ausführungsbeispiel der Fig. 5a und 5b lehnt sich an das Ausführungsbeispiel der Fig. 2a und 2b an. Zusätzlich ist im Inneren ein weiterer Schlauchmantel 5, der in diesem Ausführungsbeispiel allerdings aufblasbar gestaltet ist.

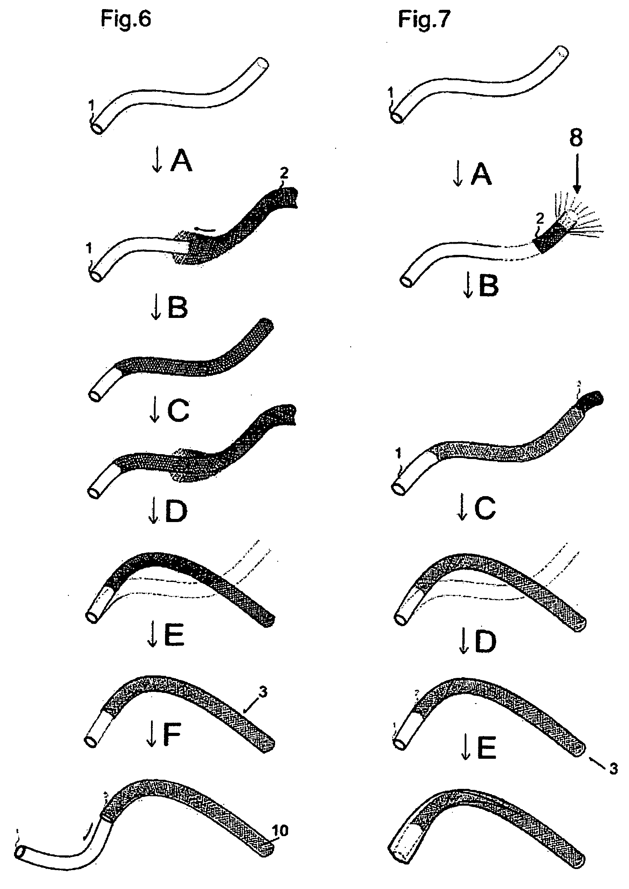

In der Fig. 6 sind die einzelnen Schritte eines nicht erfindungsgemäßen Verfahrens für die Herstellung eines Strukturelements 10 gezeigt, bei dem der flexible Schlauch 1 im Inneren des Strukturelements 10 angeordnet ist. Ausgehend vom flexiblen Schlauch 1 wird in Schritt A das Schlauchgewebe 2 über den flexiblen Schlauch 1 gestülpt und an die Außenmantelfläche 1a angelegt, wie in Schritt B erkennbar ist. In Schritt C wird ein zweites Schlauchgewebe 2' aufgebracht und entsprechend straff gezogen. Schritt D zeigt, dass der flexible Schlauch 1 samt Schlauchgewebe 2, 2' in die gewünschte Form gebracht wird. Hierfür können nicht gezeigte Halteelemente verwendet werden. In Schritt E wird anschließend ein flüssiger Kunststoff als Kunststoffharz 3 auf das Schlauchgewebe 2, 2' aufgetragen, sodass sich ein faserverstärkter Kunststoff mit zwei Schlauchgeweben 2, 2' ausbildet. Das Kunststoffharz 3 wird anschließend ausgehärtet, sodass das fertige Strukturelement 10 vorhanden ist. In einem optionalen Schritt F wird der Schlauch 1 aus dem ausgehärteten Strukturelement wieder entfernt.

Die Fig. 7 zeigt ein erfindungsgemäßes Verfahren. Dabei wird das Schlauchgewebe 2 in das Innere des Schlauchs 1 eingeführt. Das Schlauchgewebe 2 kann einerseits aus einzelnen Rovings 8 direkt auf einen weiteren Schlauchmantel 5, der die Funktion einer Einführhilfe 5 übernimmt, aufgeflochten werden (angedeutet durch die einzelnen Rovings 8 des Schlauchgewebes in Schritt A). Andererseits kann das Schlauchgewebe 2 vorgefertigt sein und auf die Einführhilfe 5 aufgeschoben werden (nicht gezeigt). Die Einführhilfe 5 (aufblasbarer Schlauch 5) und Schlauchgewebe 2 werden in Position gebracht durch Einführen in den flexiblen Schlauch 1 (Schritt B). In Schritt C wird der flexible Schlauch 1 samt Schlauchgewebe 2 in die gewünschte Form gebracht. Schritt D zeigt nun schematisch das Aufbringen des flüssigen Kunststoffs 3. Hierzu kann beispielsweise durch Druck das Kunststoffharz in das Innere (in Pfeilrichtung) des Schlauches 1 eingebracht werden. Hierbei ist von Vorteil, den Druck lediglich ins Volumen zwischen Schlauch 1 und aufblasbarem Schlauch 5 einzubringen, sodass das Kunststoffharz lediglich das zwischen Schlauch 1 und aufblasbarem Schlauch 5 liegende Schlauchgewebe 2 tränkt und nicht das gesamte Innenvolumen von Schlauch 1 ausfüllt, was kosten- und Gewichtsvorteile bringt. Auch wäre es möglich, an der anderen Seite des Schlauches 1 einen niedrigeren Druck (beispielsweise Vakuum) - vorteilhafterweise wiederum lediglich am Volumen zwischen Schlauch 1 und aufblasbarem Schlauch 5 - anzulegen, um das Kunststoffharz in das Innere des Schlauches 1 zu befördern. Der aufblasbare Schlauch 5 kann nach dem Einbringen des Kunststoffharzes mittels Über- oder Unterdruck wieder entfernt werden. Nach einem Aushärteschritt wird im optionalen Schritt E der Außenmantel (flexibler Schlauch 1) aufgeschnitten und entfernt. Zurück bleibt der faserverstärkte Kunststoff als Strukturelement 10 mit besonders glatter Außenkontur, da dieser die Innenkontur des Schlauchs 1 übernommen hat. Schritt E kann aber auch entfallen.

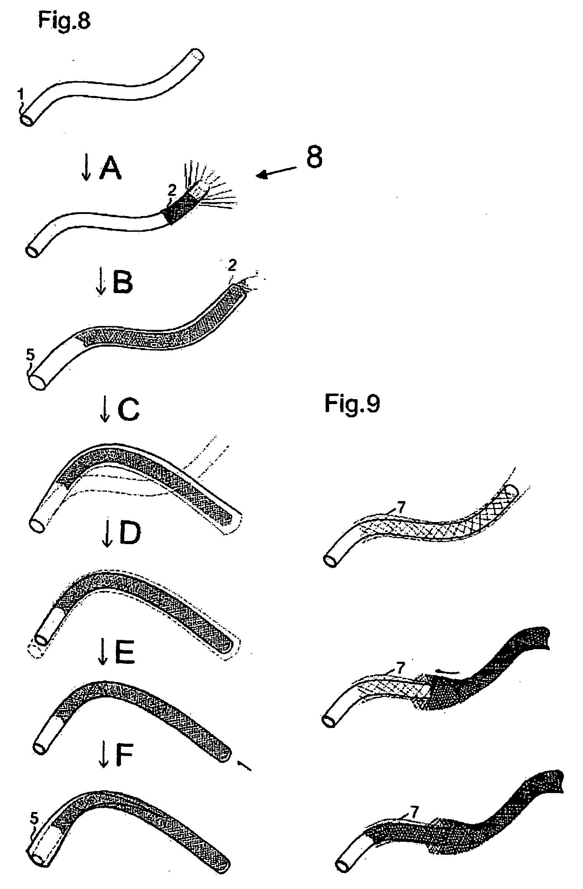

In der Fig. 8 sind einzelne Verfahrensschritte für die Herstellung eines weiteren nicht erfindungsgemäßen Ausführungsbeispiels eines Strukturelements 10 gezeigt, bei dem der flexible Schlauch 1 im Inneren des Strukturelements 10 angeordnet ist. Ausgehend vom flexiblen Schlauch 1 wird in Schritt A ein Schlauchgewebe 2 aus Rovings 8 auf den flexiblen Schlauch 1 gewebt und an die Außenmantelfläche 1a angelegt (Schritt A). In Schritt B wird ein zusätzlicher Schlauchmantel 5 in Form eines Schrumpfschlauchs auf das Schlauchgewebe 2 aufgebracht. Anschließend erfolgt die Formgebung von flexiblen Schlauch 1 mit Schlauchgewebe 2 und Schrumpfschlauch 5 in die gewünschte Endform (Schritt C). In Schritt D wird der Schrumpfschlauch 5 mittels Temperatureinwirkung geschrumpft, sodass er eng am Schlauchgewebe 2 anliegt. In Schritt E wird ein flüssiger Kunststoff als Kunststoffharz 3 auf das Schlauchgewebe 2 aufgetragen, indem er zwischen Schrumpfschlauch 5 und flexiblen Schlauch 1 eingebracht wird, so dass sich das Schlauchgewebe mit dem flüssigen Kunststoffharz 3 benetzt. Das Kunststoffharz 3 wird anschließend ausgehärtet, In einem optionalen Schritt F kann der Schrumpfschlauch 5 entfernt werden. Die Schritte C und D können auch in umgekehrter Reihenfolge statt finden.

Fig. 9 zeigt eine nicht erfindungsgemäße Variante für das Beispiel der Fig. 8 wo zunächst auf den flexiblen Schlauch 1 eine Fließhilfe 6 aufgebracht wird, damit der flüssige Kunststoff 3 besser zwischen Schrumpfschlauch 5 und flexiblen Schlauch 1 eindringen kann. Anschließend wird das Schlauchgewebe 2 (hier direkt als Schlauch) in zwei Lagen mit einer Fließhilfe 6 als Zwischenlage aufgebracht.

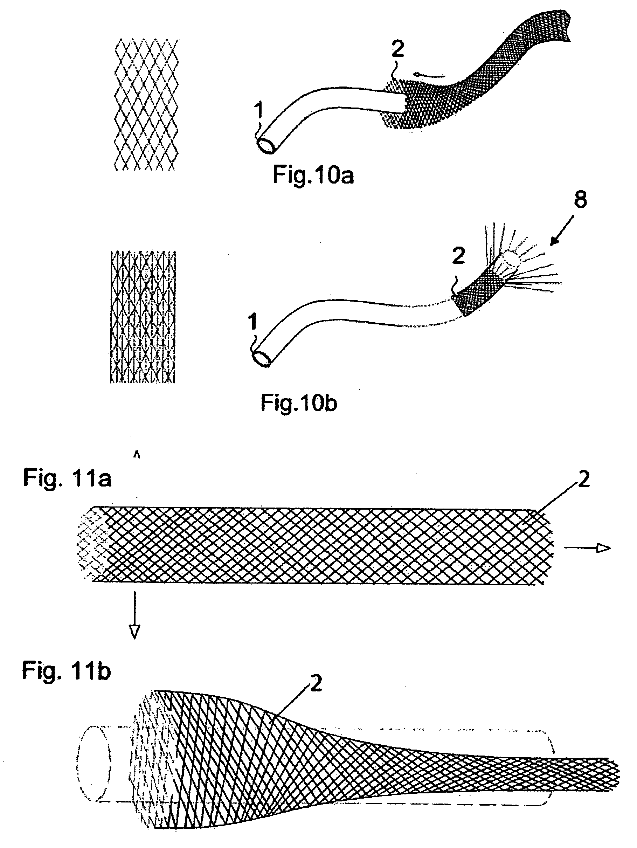

Fig. 10a und 10b zeigen, dass das Schlauchgewebe 2 entweder als vorgefertigter biaxialer Schlauch (Fig. 10a) oder direkt am flexiblen Schlauch 1 aus Rovings 8 gewebt werden kann.

In der Fig. 11a ist ein Schlauchgewebe 2 erkennbar, das zylindermantelförmig ausgebildet ist und einen Innendurchmesser aufweist, sodass es um einen flexiblen Schlauch 1, wie in der Fig. 11b strichliert dargestellt, schiebbar wäre. Allerdings kann das Schlauchgewebe 2 auch so ausgebildet sein, wie im rechten Teil der Abbildung 11b erkennbar, dass er in Längsrichtung dehnbar ist und somit seinen Innendurchmesser verkleinert und damit in das Innere des flexiblen Schlauchs 1 einführbar ist.

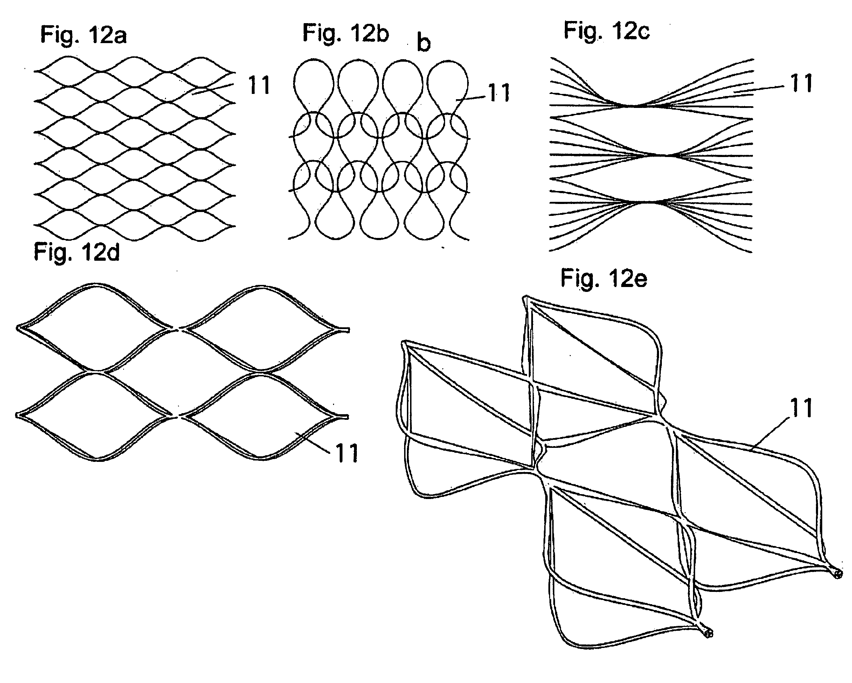

In den Fig. 12a bis 12e sind unterschiedliche Ausgestaltungen gezeigt, wie die einzelnen Strukturelemente 10 zueinander angeordnet sein könnten, um eine Anordnung 11 zu bilden. Diese könnten einerseits ästhetisch angeordnet werden, andererseits für komplexere Strukturen wie beispielsweise Konstruktionsmodule, Trägerelemente, Tragwerke und frei form- und gestaltbaren Flächentragwerke eingesetzt werden.

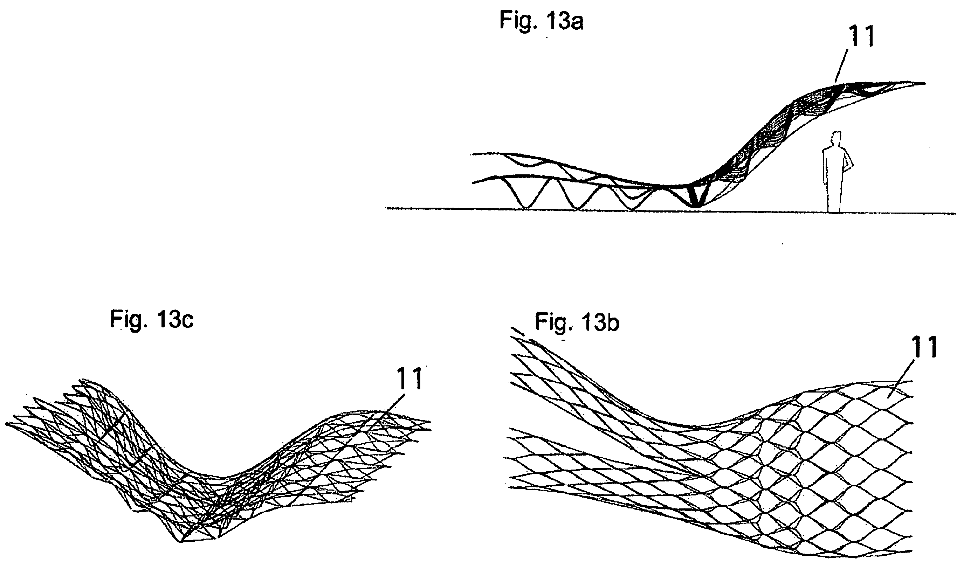

Die Fig. 13a bis 13c zeigen drei Ansichten einer Anordnung 11 von Strukturelementen 10. Die Fig. 13a zeigt dabei eine Seitenansicht, die Fig. 13b eine Draufsicht und die Fig. 13c eine Schrägansicht. Zur Verdeutlichung ist in der Fig. 13a ein Mensch eingezeichnet, sodass klar ist, dass die Anordnung 11 eine Art Dachkonstruktion bildet.

Selbstverständlich ist denkbar und in weiteren Ausführungsbeispielen vorgesehen, die Strukturelemente zu Anordnungen für weitere Anwendungen zu verbinden, wie z.B. für Dachkonstruktionen und Pavillons, Decken- und Fassadenelemente, Möbel und insbesondere Stühle, Lampen und Beleuchtungskörper, Rauminstallationen sowie weitere Kunstobjekte oder ästhetische Formschöpfungen.

## Patentansprüche

1. Verfahren zur Herstellung eines einen faserverstärkten Kunststoff umfassenden Strukturelements, wobei
- ein flexibler Schlauch (1) ausgewählt ist aus der Gruppe Gummi, PVC, PE, PA, PU, der Silikone, PTFE,
- ein Schlauchgewebe (2) mit einem Schlauchmantel (5) versehen wird,
- der flexible Schlauch (1) mit dem Schlauchgewebe (2) versehen wird, indem das Schlauchgewebe (2) in das Innere des flexiblen Schlauchs (1) eingebracht wird,
- zwischen dem Schlauchmantel (5) und dem Schlauchgewebe (2) oder zwischen dem flexiblen Schlauch (1) und dem Schlauchgewebe (2) eine Fließhilfe (6) eingebracht wird,
- der flexible Schlauch (1) mit dem Schlauchgewebe (2) in eine gebogene Form gebracht wird,
- ein flüssiger Kunststoff (3) auf das Schlauchgewebe (2) aufgebracht wird, nachdem der flexible Schlauch (1) mit dem Schlauchgewebe (2) versehen wurde, indem der flüssige Kunststoff (3) durch das Anlegen eines erhöhten Drucks in das Innere des flexiblen Schlauchs (1) und zwischen den flexiblen Schlauch (1) und den Schlauchmantel (5) eingebracht wird,
- anschließend der auf das Schlauchgewebe (2) aufgebrachte, flüssige Kunststoff (3) ausgehärtet wird.

2. Verfahren nach Anspruch 1, **dadurch gekennzeichnet, dass** der flexible Schlauch (1) nach dem Aushärten des Kunststoffs (3) zumindest teilweise wieder entfernt wird.

3. Verfahren nach Anspruch 1 oder 2, **dadurch gekennzeichnet, dass** der flexible Schlauch (1) einen mittleren Außendurchmesser (a) von 5 mm bis 100 mm und eine mittlere Wandstärke (d) von 0,5 mm bis 15 mm aufweist.

4. Verfahren nach einem der Ansprüche 1 bis 3, **dadurch gekennzeichnet, dass** das Schlauchgewebe (2) mehrere Lagen aufweist oder mehrlagig aufgebracht wird.

5. Verfahren nach einem der Ansprüche 1 bis 4, **dadurch gekennzeichnet, dass** der flüssige Kunststoff (3) durch Polymerisation ausgehärtet wird und der Kunststoff (3) insbesondere ausgewählt ist aus der Gruppe der Epoxidharze, Polyesterharze, Vinylesterharze oder Mischungen daraus.

6. Verfahren nach einem der Ansprüche 1 bis 5, **dadurch gekennzeichnet, dass** das Schlauchgewebe (2) ausgewählt ist aus der Gruppe von gewebten Glasfasern, Kohlenstofffasern, Aramidfasern, Basaltfasern, Hanf, Flachs, Baumwolle oder Mischungen daraus.

7. Verfahren nach einem der Ansprüche 1 bis 6, **dadurch gekennzeichnet, dass** das Schlauchgewebe (2) zylindermantelförmig ausgebildet ist und insbesondere derart gewebt ist, dass es radial und/oder in Längsrichtung dehnbar ist.

8. Verfahren nach einem der Ansprüche 1 bis 7, **dadurch gekennzeichnet, dass** der Schlauchmantel (5) nach dem Aushärten des Kunststoffs (3) entfernt wird.

9. Verfahren nach einem der Ansprüche 1 bis 8, **dadurch gekennzeichnet, dass** der Schlauchmantel (5) aufblasbar ist und nach dem Einbringen des flüssigen Kunststoffs (3) mittels Unterdruck entfernt wird.

10. Verfahren nach einem der Ansprüche 1 bis 9, **dadurch gekennzeichnet, dass** der flexible Schlauch (1) nach dem Aushärten des Kunststoffs (3) aufgeschnitten und entfernt wird.

11. Verfahren nach Anspruch 10, **dadurch gekennzeichnet, dass** nach dem Entfernen des flexiblen Schlauchs (1) der faserverstärkte Kunststoff (3) als Strukturelement mit glatter Außenkontur zurückbleibt.

12. Verfahren nach einem der Ansprüche 1 bis 11, **dadurch gekennzeichnet, dass** der Kunststoff (3) durch den Druck in das Innere des flexiblen Schlauchs (1) eingebracht wird, wobei der Druck lediglich in das Volumen zwischen dem flexiblen Schlauch (1) und dem aufblasbaren Schlauchmantel (5) eingebracht wird und der Kunststoff (3) lediglich das zwischen dem flexiblen Schlauch (1) und dem Schlauchmantel (5) liegende Schlauchgewebe (2) tränkt.

## Claims

1. Method of manufacturing a structural element comprising a fiber-reinforced plastic, wherein
- a flexible tube (1) is selected from the group rubber, PVC, PE, PA, PU, silicones, PTFE,
- a tube tissue (2) is provided with a tube casing (5),
- the flexible tube (1) is provided with the tube tissue (2) by introducing the tube tissue (2) into the interior of the flexible tube (1),
- a flow aid (6) is introduced between the tube casing (5) and the tube tissue (2) or between the flexible tube (1) and the tube tissue (2),
- the flexible tube (1) with the tube tissue (2) is brought in a bent form,
- a liquid plastic (3) is applied onto the tube tissue (2) after the flexible tube (1) was provided with the tube tissue (2), by applying an increased pressure in the interior of the flexible tube (1) and between the flexible tube (1) and the tube casing (5),
- subsequently, the liquid plastic (3) applied onto the tube tissue (2) is cured.

2. Method according to claim 1, **characterized in that** the flexible tube (1) is at least partially removed after curing the plastic (3).

3. Method according to claim 1 or 2, **characterized in that** the flexible tube (1) comprises a mean outer diameter (a) of 5 mm to 100 mm and a mean wall thickness (d) of 0,5 mm to 15 mm.

4. Method according to one of the claims 1 to 3, **characterized in that** the tube tissue (2) comprises multiple layers or is applied multilayered.

5. Method according to one of the claims 1 to 4, **characterized in that** the liquid plastic (3) is cured by polymerization and the plastic (3) is in particular selected from the group of epoxy resins, polyester resins, vinyl ester resins or compositions thereof.

6. Method according to one of the claims 1 to 5, **characterized in that** the tube tissue (2) is selected from the group of woven glass fibers, carbon fibers, aramid fibers, basalt fibers, hemp, flax, cotton or compositions thereof.

7. Method according to one of the claims 1 to 6, **characterized in that** the tube tissue (2) is cylinder barrel shaped and is in particular woven such that it is extendable radially and/or in a longitudinal direction.

8. Method according to one of the claims 1 to 7, **characterized in that** the tube casing (5) is removed after curing the plastic (3).

9. Method according to one of the claims 1 to 8, **characterized in that** the tube casing (5) is inflatable and is removed after introducing the liquid plastic (3) by underpressure.

10. Method according to one of the claims 1 to 9, **characterized in that** the flexible tube (1) is cut open and removed after curing the plastic (3).

11. Method according to claim 10, **characterized in that** after removing the flexible tube (1) the fiber-reinforced plastic (3) remains as structural element with a smooth outer contour.

12. Method according to one of the claims 1 to 11, **characterized in that** the plastic (3) is introduced into the interior of the flexible tube (1) by pressure, wherein the pressure is merely introduced into the volume between the flexible tube (1) and the inflatable tube casing (5), and the plastic (3) soaks merely the tube tissue (2) located between the flexible tube (1) and the tube casing (5).

## Revendications

1. Procédé servant à fabriquer un élément de structure comprenant une matière plastique renforcée par des fibres, **caractérisé en ce**
- **qu'**un tuyau (1) flexible est choisi parmi le groupe comprenant le caoutchouc, le PVC, le PE, le PA, le PU, les silicones, le PTFE,
- **qu'**un tissu de tuyau (2) est pourvu d'une gaine de tuyau (5),
- **que** le tuyau (1) flexible est pourvu du tissu de tuyau (2) en ce que le tissu de tuyau (2) est introduit à l'intérieur du tuyau (1) flexible,
- **qu'**une aide à l'écoulement (6) est introduite entre la gaine de tuyau (5) et le tissu de tuyau (2) ou entre le tuyau (1) flexible et le tissu de tuyau (2),
- **que** le tuyau (1) flexible doté du tissu de tuyau (2) est façonné de manière à présenter une forme cintrée,
- **qu'**une matière plastique (3) liquide est appliquée sur le tissu de tuyau (2) après que le tuyau (1) flexible a été pourvu du tissu de tuyau (2) en ce que la matière plastique (3) liquide est introduite, par l'application d'une pression plus élevée, à l'intérieur du tuyau (1) flexible et entre le tuyau (1) flexible et la gaine de tuyau (5),
- **que** la matière plastique (3) liquide, appliquée sur le tissu de tuyau (2) est par la suite durcie.

2. Procédé selon la revendication 1, **caractérisé en ce que** le tuyau (1) flexible est retiré au moins en partie à nouveau après le durcissement de la matière plastique (3).

3. Procédé selon la revendication 1 ou 2, **caractérisé en ce que** le tuyau (1) flexible présente un diamètre extérieur moyen (a) allant de 5 mm à 100 mm et une épaisseur de paroi moyenne (d) allant de 0,5 mm à 15 mm.

4. Procédé selon l'une quelconque des revendications 1 à 3, **caractérisé en ce que** le tissu de tuyau (2) présente plusieurs couches ou est appliqué en plusieurs couches.

5. Procédé selon l'une quelconque des revendications 1 à 4, **caractérisé en ce que** la matière plastique (3) liquide est durcie par polymérisation et la matière plastique (3) est choisie en particulier parmi le groupe des résines époxy, des résines de polyester, des résines d'ester vinylique ou des mélanges de celles-ci.

6. Procédé selon l'une quelconque des revendications 1 à 5, **caractérisé en ce que** le tissu de tuyau (2) est choisi parmi le groupe des fibres de verre tissées, des fibres de carbone, des fibres d'aramide, des fibres de basalte, du chanvre, du lin, du coton ou des mélanges de ceux-ci.

7. Procédé selon l'une quelconque des revendications 1 à 6, **caractérisé en ce que** le tissu de tuyau (2) est réalisé de manière à présenter une forme de gaine cylindrique et est tissé en particulier de telle manière qu'il peut être extensible radialement et/ou dans la direction longitudinale.

8. Procédé selon l'une quelconque des revendications 1 à 7, **caractérisé en ce que** la gaine de tuyau (5) est retirée après le durcissement de la matière plastique (3).

9. Procédé selon l'une quelconque des revendications 1 à 8, **caractérisé en ce que** la gaine de tuyau (5) peut être gonflée et être retirée au moyen d'un vide après l'introduction de la matière plastique (3) liquide.

10. Procédé selon l'une quelconque des revendications 1 à 9, **caractérisé en ce que** le tuyau (1) flexible est coupé et retiré après le durcissement de la matière plastique (3).

11. Procédé selon la revendication 10, **caractérisé en ce que** la matière plastique (3) renforcée par des fibres reste sous la forme d'un élément de structure présentant un contour extérieur lisse après le retrait du tuyau (1) flexible.

12. Procédé selon l'une quelconque des revendications 1 à 11, **caractérisé en ce que** la matière plastique (3) est introduite par la pression à l'intérieur du tuyau (1) flexible, où la pression est introduite seulement dans le volume entre le tuyau (1) flexible et la gaine de tuyau (5) pouvant être gonflée et la matière plastique (3) imprègne seulement le tissu de tuyau (2) se trouvant entre le tuyau (1) flexible et la gaine de tuyau (5).
